# EUROPEAN PATENT APPLICATION

(11) **EP 2 508 852 A1**
(43) Date of publication of application: **10.10.2012**
(21) Application number: 10833070.5
(22) Date of filing: 10.11.2010
(51) Int. Cl.: G01F 23/38

(54) **LIQUID LEVEL DETECTION DEVICE**

(30) Priority: 30.11.2009 JP 2009270920
(71) Applicant: Nippon Seiki Co., Ltd., Nagaoka-shi, Niigata 940-8580 (JP)
(72) Inventor: ICHISAWA,Hisahito, Niigata (JP)
(74) Representative: Carpmaels & Ransford
(86) International application number: PCT/JP2010/069979
(87) International publication number: WO 2011/065223

(57) **Abstract**

Disclosed is a liquid level detection device that can be miniaturized. The liquid level detection device 1 is provided with: a float arm 3 that is provided with a float 2 that moves, tracking the displacement of a liquid level; a magnet 4 that rotates in accordance with the motion of the float arm 3; a detection element 6 that detects the magnetic variation of the magnet 4; and an electronic component 13 that is electrically connected to the detection element 6. The detection element 6 is provided with a main body 6a and at least three leads 6b. The ends 6b2 of the plurality of leads 6b are folded in a manner so that adjacent leads 6b are in differing positions with respect to the direction of the axis of rotation of the magnet 4. The electronic component 13 is provided with a main body section 13a and two lead sections 13b. The ends 13b2 of the plurality of lead sections 13b are folded in a manner so that each is in a differing position with respect to the direction of the axis of rotation of the magnet 4. The leads 6b of the detection element 6 and the lead sections 13b of the electronic component 13 are electrically connected.

## Description

### Technical Field

The present invention relates to a liquid level detection device configured to detect a liquid level of liquid such as fuel in a tank.

### Background Art

In order to detect the liquid level of liquid such as fuel in a tank of a motor vehicle, a non-contact type liquid level detection device using a magnetoelectric device is proposed.

The liquid level detection device is configured in such a manner that the magnetoelectric device, an electronic component, and a pair of stators are fixed to predetermined positions of a set of terminals as a terminal assy, and the terminal assy is insert-molded with a synthetic resin-made housing and the terminal assy is embedded in the housing (For example, Patent Document 1).

### Cited Reference

### Patent Document

Patent Document 1: JP-A-2004-251780

### Summary of the Invention

### Problems to be Solved by the Invention

Incidentally, in the liquid level detection device, the terminal has a plate shape formed by a press working applied on a conductive metallic panel, and the electronic components such as the magnetoelectric device, a resistance, and a capacitor are electrically connected to the plate-shaped terminal. Therefore, there is a problem that a size reduction of the liquid level detection device and, specifically, a size reduction in the direction perpendicular to the direction of an axis of rotation of a magnet is difficult.

Accordingly, focusing on the problem as described above, it is an object of the present invention to provide a liquid level detection device which is capable of achieving a size reduction.

### Means for Solving the Problem

The present invention provides a liquid level detection device including a float arm having a float which follows up a displacement of a liquid level; a magnet configured to rotate along with the movement of the float arm; a detection element configured to detect a change of magnetism of the magnet; and an electronic component electrically connected to the detection element, wherein the detection element includes a main body and at least three leads, distal end sides of the plurality of leads are bent so as to be at different positions with respect to the adjacent leads in the direction of an axis of rotation of the magnet; and the electronic component includes a main body portion and two lead portions, distal end sides of the plurality of lead portions are bent so as to be at different positions with respect to the direction of the axis of rotation of the magnet, and the leads of the detection element and the lead portions of the electronic component are electrically connected.

Also, the leads and the lead portions are connected by welding.

Also, a holder member configured to hold the detection element and the electronic component is provided.

Also, the holder member includes a holding portion configured to hold the main body of the detection element and the lead.

Also, the holder member includes a holding portion configured to hold the main body portion of the electronic component and the lead portion.

Also, main body sides of the leads face the direction of the axis of rotation of the magnet.

Also, main body portion sides of the lead portions face the direction of the axis of rotation of the magnet.

Also, the distal end sides of the three leads are arranged and the electronic component is disposed on the side of the leads.

### Advantage of the Invention

The liquid level detection device according to the present invention is capable of providing a liquid level detection device which is capable of achieving a size reduction.

### Brief Description of the Drawings

[Fig. 1] Fig. 1 is a cross-sectional view of a liquid level detection device according to a first embodiment of the present invention.

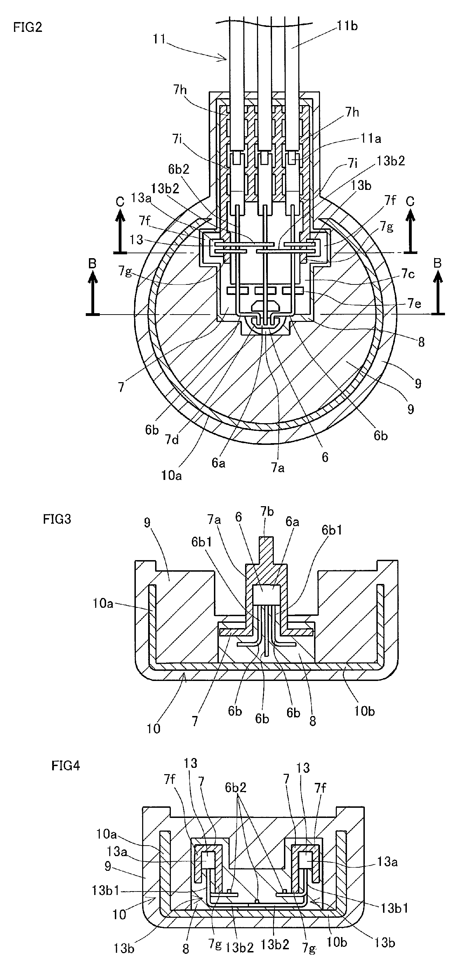

[Fig. 2] Fig. 2 is a cross-sectional view taken along the line A-A in Fig. 1.
[Fig. 3] Fig. 3 is a cross-sectional view taken along the line B-B in Fig. 2.
[Fig. 4] Fig. 4 is a cross-sectional view taken along the line C-C in Fig. 2.

### Mode for Carrying Out the Invention

Referring now to the attached drawings, a first embodiment of the present invention will be described.

A liquid level detection device 1 according to the present invention includes a float 2, a float arm 3, an arm holder 4, a magnet 5, a detection element 6, a holder member 7, a first case body 8, a second case body 9, a frame cover 12, and an electronic component 13. Reference numeral 10 designates a shield case, reference numeral 11 designates an electrically connecting member, and reference numeral 14 designates a conducting panel.

The float 2 floats on a liquid surface of the liquid such as liquid fuel and follows up a displacement of the liquid level and, in this embodiment, is formed of a metal which resists corrosion such as stainless. The material of the float 2 is not limited to this embodiment, and may be formed of synthetic resin or the like.

The float arm 3 is formed of a non-magnetic metal, and is configured to hold the float 2 at one end thereof, and is attached to the arm holder 4 at the other end thereof.

The arm holder 4 is formed of a synthetic resin and holds the float arm 3 and the magnet 5.

The arm holder 4 includes a cylindrical portion 4a, and the magnet 5 on the inner side of the cylindrical portion 4a. The arm holder 4 holds the float arm 3 with arm holding portion 4c.

The arm holder 4 includes a column portion 4b at a center portion thereof, and the column portion 4b includes a bearing 4d formed of a depression configured to rotatably support a spindle portion, described later, of the holder member 7, and the arm holder 4 is rotatably supported by the holder member 7.

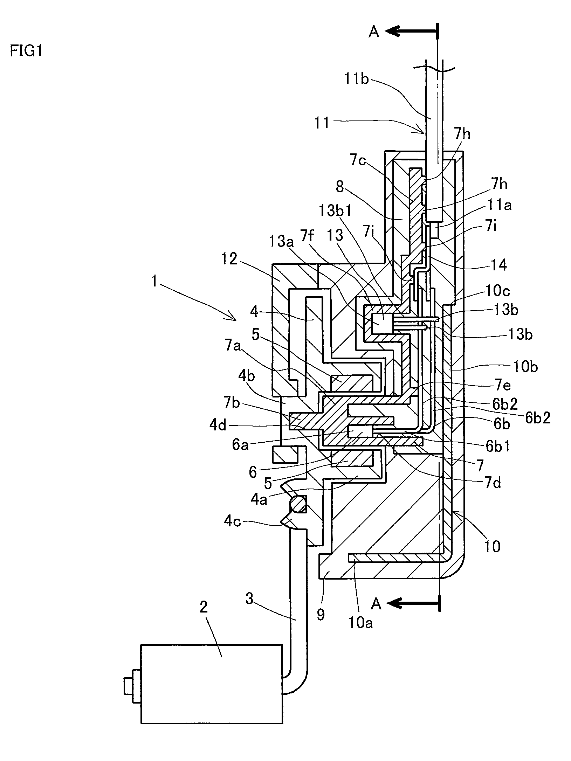

The frame cover 12 is disposed on the left side of the arm holder 4 in Fig. 1, and is fixed to the second case body 9. The frame cover 12 holds the arm holder 4 in a retained state, and functions as a bearing which bears the column portion 4b of the arm holder 4.

The magnet 5 has an annular shape and is magnetized into two poles, and is formed integrally by mean of insert-molding at the same time as molding of the arm holder 4. The magnet 5 is arranged so as to oppose the outer periphery of a cylindrical portion, described later, of the second case body 9, and is disposed so as to surround the detection element 6. The magnet 5 rotates along with the movement of the float arm 3.

The detection element 6 is formed of a magnetoelectric device such as a Hall element, detects a change of magnetism along with the rotation of the magnet 5 and outputs a detection signal. The detection element 6 includes a main body 6a covered at a detecting portion with a resin and a lead 6b extending from the main body 6a.

The detection element 6 of this embodiment includes three of the leads 6b. The leads 6b each are divided into a main body side 6b1 and a distal end side 6b2 by a bent portion as a boundary. The main body side 6b1 of the lead 6b faces the direction of an axis of rotation of the magnet 5 together with the main body 6a of the detection element 6, and the distal end side 6b2 of the lead 6b is bent into a direction perpendicular to the direction of the axis of rotation of the magnet 5. Then, among the plurality of distal end sides 6b2 of the adjacent leads 6b are individually at different positions with respect to the direction of the axis of rotation of the magnet 5. In this embodiment, the distal end side 6b2 of the center lead 6b and the distal end sides 6b2 of the two leads 6b on both sides from among the three leads 6b are provided in such a manner that the distal end side 6b2 of the center lead 6b is located away from the magnet 5 in comparison with the distal end sides 6b2 of the two leads 6b on the both sides in the direction of the axis of rotation of the magnet 5.

The detection element 6 is disposed on the holder member 7, and the leads 6b are electrically connected to lead portions 13b of the electronic components 13 and the conducting panels 14. The connection of the leads 6b to the lead portions 13b or the conducting panels 14 are connected by welding. The detection element 6 may be formed of a detection element such as an MR element, for example.

The holder member 7 is formed of a synthetic resin, for example, of a synthetic resin such as polybutylene terephthalate (PBT). The holder member 7 includes a column portion 7a having a spindle portion 7b configured to rotatably support the arm holder 4. The holder member 7 includes a frame body 7c formed so as to extend in the direction perpendicular to the center axis of the column portion 7a.

The column portion 7a of the holder member 7 is provided with a first holding portion 7d formed of a depression for holding the body portion 6a of the detection element 6. The frame body 7c is provided with second holding portions 7e configured to come into abutment with and hold the leads 6b of the detection element 6. The second holding portions 7e come into abutment with the distal end sides 6b2 of the respective leads 6b of the detection element 6.

The frame body 7c further includes third holding portions 7f configured to hold the main body portions 13a of the electronic components 13, fourth holding portions 7g configured to hold the lead portions 13b, fifth holding portions 7h configured to hold the electrically connecting members 11, and sixth holding portions 7i configured to hold the conducting panels 14.

The third holding portions 7f restrict the movement and the inclination of the direction of the axis of rotation of the magnet 5 of the main body portions 13a of the electronic components 13 and, in this embodiment, each have a cup shape. Main body portions 13a of the electronic components 13 are stored in the interior of the cup shapes. The shape of the third holding portions 7f is not limited to the shape of the cup, and may be of any shape as long as the movement and the inclination of the main body portions 13a of the electronic components 13 in the direction of the axis of rotation of the magnet 5 are restricted. The fourth holding portions 7g are configured to come into abutment with and hold the respective lead portions 13b of the main body portions 13a. The fifth holding portions 7h include wall portions coming into abutment with the electrically connecting members 11 and clamping the electrically connecting members 11 from both sides, and are configured to hold the electrically connecting members 11. The sixth holding portions 7i are configured to come into abutment with and hold the conducting panels 14.

The electronic component 13 is configured to reduce noise of the detection element 6 at the time of input and output by, for example, a capacitor or a diode. The electronic components 13 are disposed on the side of the leads 6b with respect to the distal end sides 6b2 of the three leads 6b of the detection element 6 arranged side-by-side. The electronic components 13 each include the main body portion 13a and the lead portions 13b extending from the main body portion 13a.

The electronic components 13 of this embodiment each include two lead portions 13b. The lead portions 13b each are divided into a main body side 13b1 and a distal end side 13b2 by a bent portion as a boundary, and the main body sides 13b1 of the lead portions 13b face the direction of the axis of rotation of the magnet 5 together with the main body portions 13a of the electronic components 13, and the distal end sides 13b2 of the lead portions 13b are bent in the direction perpendicular to the direction of the axis of rotation of the magnet 5 and are bent in the direction intersecting the distal end sides 6b2 of the leads 6b of the detection element 6 at a right angle. Then, the distal end sides 13b2 of the plurality of lead portions 13b are arranged in such a manner that the distal end sides 13b2 of the respective lead portions 13b are at different positions with respect to the direction of the axis of rotation of the magnet 5. In this embodiment, the distal end side 13b2 of one of the two lead portions 13b and the distal end side 13b2 of the other lead portion 13b are arranged in such a manner that the distal end side 13b2 of the one lead portion 13b is located away from the magnet 5 in comparison with the distal end side 13b2 of the other lead portion 13b in the direction of the axis of rotation of the magnet 5.

The lead portions 13b of the electronic components 13 are electrically connected to the leads 6b of the detection element 6. The lead portions 13b are connected to the leads 6b by welding.

The first case body 8 is formed of a synthetic resin which can be molded at a low pressure, for example, a polyester-based synthetic resin, and the detection element 6, part of the holder member 7, part of the electrically connecting member 11, the electronic components 13, and the conducting panels 14 are covered by forming the first case body 8 by insert-molding. Part of the column portion 7a of the holder member 7 and the spindle portion 7b are exposed without being covered with the first case body 8.

The second case body 9 is formed of a synthetic resin, for example, a synthetic resin such as PBT or polyacetal (POM), and covers the first case body 8 and the shield case 10 except for part of the column portion 7a of the holder member 7 and the spindle portion 7b.

The holder member 7 and the second case body 9 are formed of the same material, for example of PBT, so that the holder member 7 and the second case body 9 are melted when forming the second case body 9, whereby the holder member 7 and the second case body 9 are adhered to each other. Therefore, entry of fuel or the like into the second case body 9 from the adhered portion between the holder member 7 and the second case body 9 can be prevented.

The coefficients of thermal expansion of the first case body 8 and the second case body 9 are approximate, so that separation due to a temperature change is prevented.

The shield case 10 is configured to protect the detection element 6 from the external magnetic field and, for example, is formed of iron-nickel alloy, and has a cup shape having a cylindrical portion 10a and a bottom portion 10b. Part of the cylindrical portion 10a is provided with a cutout portion 8c for drawing the first case body 8 out of the shield case 10.

The shield case 10 is configured to be covered with the second case body 9 in a state in which the first case body 8 is stored in a depression formed by the cylindrical portion 10a and the bottom portion 10b. The shield case 10 is formed so as to store a portion of the first case body 8 corresponding to the detection element 6. The shield case 10 may block the influence of the magnetism from the outside of the liquid level detection device 1, and hence a detection output with high degree of accuracy can be obtained.

The shield case 10 can be prevented from being deformed by covering the shield case 10 with the second case body 9. By preventing deformation of the shield case 10, the change of the magnetic characteristic can be prevented. In addition, corrosion of the shield case 10 can also be prevented. In particular, this configuration is effective when the fuel contains alcohol.

The electrically connecting members 11 are lead wires in this embodiment, and each include a conductor 11a having a good conductivity such as copper and an insulating covering 11b which covers the conductor 11a. The conductors 11a of the lead wires 11 are electrically connected to the conducting panels 14.

The conducting panels 14 are formed of a metal having conductivity, and are configured to electrically connect the leads 6b of the detection element 6 and the electrically connecting members 11. The conducting panels 14 and the leads 6b and the electrically connecting members 11 are electrically connected by welding.

In this embodiment, the conducting panels 14 on both sides from among the three conducting panels 14 are bent into a crank shape, and are configured to facilitate the connection between the distal end sides 6b2 of the leads 6b which located at different positions with respect to the direction of the axis of rotation of the magnet 5 and the three electrically connecting members 11 arranged at the same positions. It is also possible not to bend the conducting panels 14 on both sides into the crank shape, but form as a flat panel and, instead, arrange the electrically connecting members 11 at different position with respect to the direction of the axis of rotation of the magnet 5.

The electrical connection among the leads 6b of the detection element 6, the electrically connecting members 11, the lead portions 13b of the electronic components 13, and the conducting panels 14 may be performed by arranging the detection element 6, the electrically connecting members 11, the electronic components 13, and the conducting panels 14 and welding to achieve the electrical connection.

With the configuration as described above, the liquid level detection device 1 which can be reduced in size is provided by electrically connecting the electronic components 13 to the rod-shaped leads 6b of the detection element 6 without using the the plate-shaped terminal.

In this embodiment, the lead wires are employed as the electrically connecting members. However, the invention is not limited to this embodiment, but may be, for example, terminals exposed parts of the conducting panels 14 and provided with contact portions.

### Industrial Applicability

The present invention may be applied to a liquid level detection device configured to detect liquid levels of various types of liquid in a tank.

### Reference Numerals

- 1: liquid level detection device
- 2: float
- 3: float arm
- 5: magnet
- 6: detection element
- 6a: main body
- 6b: lead
- 6b2: lead (distal end side)
- 7: holder member
- 7d: first holding portion
- 7e: second holding portion
- 7f: third holding portion
- 7g: fourth holding portion
- 13: electronic component
- 13b: lead portion
- 13b1: lead portion (main body side)
- 13b2: lead portion (distal end side)

## Claims

1. A liquid level detection device comprising:
a float arm having a float which follows a displacement of a liquid level;
a magnet configured to rotate along with the movement of the float arm;
a detection element configured to detect a change of magnetism of the magnet; and
an electronic component electrically connected to the detection element,
wherein the detection element includes a main body and at least three leads,
distal end sides of the plurality of leads are bent so as to be at different positions with respect to the adjacent leads in the direction of an axis of rotation of the magnet; and
the electronic component includes a main body portion and two lead portions,
distal end sides of the plurality of lead portions are bent so as to be at different positions with respect to the direction of the axis of rotation of the magnet, and
the leads of the detection element and the lead portions of the electronic component are electrically connected.

2. The liquid level detection device according to Claim 1, wherein the leads and the lead portions are connected by welding.

3. The liquid level detection device according to Claim 1, comprising a holder member configured to hold the detection element and the electronic component.

4. The liquid level detection device according to Claim 3, wherein the holder member includes a holding portion configured to hold the main body of the detection element and the lead.

5. The liquid level detection device according to Claim 3, wherein the holder member includes a holding portion configured to hold the main body portion of the electronic component and the lead portion.

6. The liquid level detection device according to Claim 1, wherein main body sides of the leads face the direction of the axis of rotation of the magnet.

7. The liquid level detection device according to Claim 1, wherein main body portion sides of the lead portions face the direction of the axis of rotation of the magnet.

8. The liquid level detection device according to Claim 1, wherein the distal end sides of the three leads are arranged and the electronic component is disposed on the side of the leads.
